# EUROPÄISCHE PATENTSCHRIFT

(11) **EP 1 445 217 B1**
(45) Veröffentlichungstag und Bekanntmachung des Hinweises auf die Patenterteilung: **24.08.2005**
(21) Anmeldenummer: 04000967.2
(22) Anmeldetag: 19.01.2004
(51) Int. Cl.: B65G 47/00, G01N 3/08

(54) **Vorrichtung zum Abbremsen und Verkürzen des Transportweges von aus einer Zuführeinrichtung kommender fester Erzeugnisse in Form von Schüttgütern**
Device for slowing down and reducing the transport path of articles delivered as bulk material from a feeder
Dispositif de ralentissement et de réduction du trajet d'acheminement pour des articles solides délivrés en vrac par une unité d'alimentation

(30) Priorität: 20.01.2003 DE 10302197
(43) Veröffentlichungstag der Anmeldung: 11.08.2004
(73) Patentinhaber: Kraemer, Thilo, 64291 Darmstadt (DE)
(72) Erfinder: Kraemer, Thilo, 64291 Darmstadt (DE)
(74) Vertreter: Mierswa, Klaus

(56) Entgegenhaltungen:
- EP-A- 0 822 411
- DE-C- 10 024 970
- US-A- 4 472 960
- US-A- 4 884 463
- US-B1- 6 260 419

## Beschreibung

### Technisches Gebiet:

Die Erfindung betrifft eine Vorrichtung zum Abbremsen und Verkürzen des Transportweges von aus einer Zuführeinrichtung kommender fester Erzeugnisse in Form von Schüttgut, wie längliche Oblongs, welche in eine sowohl gegenüber dem Transportweg des Erzeugnisses als auch von oben offene Kammer aufweisende Transporteinrichtung zuführbar sind, gemäß dem Oberbegriff des Anspruchs 1.

### Stand der Technik:

Die Erfindung geht aus von einer Vorrichtung zum Abbremsen und Verkürzen des Transportweges von aus einer Zuführeinrichtung kommender, bevorzugt länglicher, fester Schüttgüter, zum Bespiel pharmazeutische Erzeugnisse. Bei der Qualitätskontrolle pharmazeutischer Erzeugnisse werden diese auf verschiedene physikalische Eigenschaften, beispielsweise Gewicht, Abmessungen und Härte geprüft. Insbesondere die Prüfungen für Abmessungen und Härte erfordert bei länglichen, pharmazeutischen Erzeugnissen, beispielsweise Oblongs, eine genau definierte Lage und Ausrichtung derselben gegenüber der Prüfeinrichtung. Bei bekannten Vorrichtungen zur Durchführung von Qualitätstests werden Oblongs mittels einer Zuführeinrichtung einzeln in je eine Kammer einer mehrere gegenüber dem Boden des Prüfraumes offene Kammern aufweisenden Transporteinrichtung zugeführt und anschließend durch die Bewegung der Transporteinrichtung und die Reibung zwischen Oblong und dem Boden des Prüfraums in ihrer größten Ausdehnungsrichtung parallel zu der Trennwand zwischen zwei benachbarten Kammern ausgerichtet. Beim Erreichen beispielsweise einer Härte-Prüfeinrichtung kann die Transporteinrichtung ein Stück zurückfahren, so dass beispielsweise ein Stempel der Härte-Prüfeinrichtung an das Oblong heranfährt und es soweit über den Boden des Prüfraumes schiebt, bis das Gegenlager der Härte-Prüfeinrichtung erreicht ist und eine Druckkraft, für die Härteprüfung, auf das Oblong aufgebracht werden kann. Nachteilig bei solchen Vorrichtungen ist, dass durch das Verschieben des länglichen Erzeugnisses auf dem Prüfraumboden in Richtung des Gegenlagers bereits bei einem sehr kleinen Verschiebeweg von etwa ein bis zwei Millimeter ein Verdrehen des Erzeugnisses stattfinden kann, wodurch eine zuverlässige Härtemessung nicht mehr möglich ist, beispielsweise weil das Erzeugnis schräg ausgerichtet an das Gegenlager anläuft und weil sich das Erzeugnis beim Aufbringen der Druckkraft plötzlich wegdreht.

Bei der in der EP 0 983 495 B1 beschriebenen Vorrichtungen zur Durchführung von Härtetests wird vorgeschlagen, den Stempel und das Gegenlager relativ zu jedem einzelnen Oblong auszurichten, egal welche Richtung das Oblong nach dem Einfallen in die Kammer bzw. die Härteteststation eingenommen hat. Eine solche Vorrichtung ist allerdings aufwendig und dadurch teuer, störanfällig und wartungsintensiv.

### Technische Aufgabe der Erfindung:

Der Erfindung liegt daher die Aufgabe zugrunde, eine Vorrichtung zu entwickeln, die es ermöglicht, längliche, feste Erzeugnisse, wie zum Beispiel pharmazeutische Oblongs, einzeln in genau bestimmbarer Position und Ausrichtung peripher in die Kammern einer Transportvorrichtung abzulegen, so dass der Transportweg eines von einem beweglichen Stempel oder Backen einer Prüfeinrichtung verschobenen Oblongs in Richtung zum Gegenlager oder zum feststehenden Gegenbacken bis zum Erreichen desselben minimal ist.

### Offenbarung der Erfindung und deren Vorteile:

Die Vorrichtung der genannten Gattung ist erfindungsgemäß gekennzeichnet durch eine längliche Platte, welche um eine Pendelachse oberhalb des Schwerpunktes der Platte entweder drehbar oder longitudinal in senkrechter Richtung verschieblich angeordnet ist und deren Breite geringer als die Breite der Kammer der Transporteinrichtung ist und die im Wesentlichen zu der durch die Eintrittsöffnung in die Kammer der Transporteinrichtung aufgespannten Ebene parallel verläuft und von oben in die Kammer ragt, gegen welche Platte das einzelne Erzeugnis anläuft und dadurch abgebremst wird.

In einer weiteren erfindungsgemäßen Ausgestaltung der Vorrichtung ist die Transporteinrichtung entweder ein um eine vertikale Achse rotierbar angeordneter, mit einer Mehrzahl von peripher angeordneten Kammern ausgestatteter Transportstern oder ein mit seitlichen Kammern ausgestattetes, längs laufendes Band oder ein Schieber, wobei die Pendelachse an der Zuführeinrichtung befestigt ist und die Platte im oberen Drittel derselben durchragt und die Platte um die Pendelachse pendelnd aufgehängt ist und damit bei Bewegung der Transporteinrichtung von der Trennwand zwischen zwei benachbarten Kammern anhebbar ist und in die folgende Kammer selbständig hineinfällt. In vorteilhafter Weise kann somit die Pendelachse an der Zuführeinrichtung befestigt sein, womit auch die pendelnde Platte Teil der Zuführeinrichtung ist. Allerdings kann die Pendelachse und somit die Platte auch unabhängig von der Zuführeinrichtung peripher oder im Wesentlichen peripher stationär bezüglich der Transporteinrichtung montiert sein.

Die erfindungsgemäße Vorrichtung zum Abbremsen und Verkürzen des Transportweges von länglichen und festen Erzeugnissen, wie pharmazeutischen Oblongs, weist gegenüber dem Stand der Technik den Vorteil auf, dass mittels einer von oben in die Kammer einer Transporteinrichtung hineinragenden, länglichen Platte das in die Kammer gleitende Oblong so abgestoppt wird, dass entweder das der Platte abgewandte Ende des Oblongs bündig oder fast bündig mit der äußeren Begrenzung der Transporteinrichtung zum Liegen kommt oder die von der Platte abgewandte Breitseite des Oblongs. Im letztgenannten Fall wird das Oblong bei der Weiterbewegung der Transporteinrichtung durch die mitnehmende Wandung der Kammer der Transporteinrichtung um einen Winkel von 90 Grad gedreht, bis die Breitseite auch in diesem Fall längs der Wandung der Kammer anliegt. Dadurch ist in jedem Fall sichergestellt, dass beim Weitertransportieren des Oblongs in eine Härteteststation das Oblong sowohl mit seiner Breitseite an der mitnehmenden Wandung der Kammer als auch mit seinem äußeren Ende am feststehenden Gegenbacken der Druckeinrichtung anliegt oder fast anliegt. Dadurch ist beim Anfahren des beweglichen Backens in Richtung auf das längs ausgerichtete Oblong ein Verdrehen oder Wegdrehen desselben nicht möglich; die Kraft des Gegenbackens in Zusammenwirken mit dem beweglichen Backen wird in Längsrichtung des Oblongs auf dieses ausgeübt.

Die Platte ist somit senkrecht zur Bewegungsrichtung des Oblongs bei der Zufuhr in die Kammer ausgerichtet und verläuft parallel zu der von der äußeren Begrenzung der Kammer gebildeten Ebene. Die Platte in ihrer Breite geringer ist als die Breite der Kammer der Transporteinrichtung ausgeführt und um eine Achse oberhalb ihres Schwerpunktes drehbar oder longitudinal in senkrechter Richtung verschieblich angeordnet, so dass die Platte der zwei benachbarten Kammern voneinander abgrenzenden Trennwand bei der Bewegung der Transporteinrichtung, beispielsweise nach oben ausweichend, angeordnet werden kann. Auch wenn die Kammer durch ein Erzeugnis belegt sein sollte, kann die Platte nach oben ausweichen.

Die Vorrichtung ist insbesondere auch dazu geeignet, an bestehenden Geräten zur Qualitätskontrolle länglicher, fester, pharmazeutischer Erzeugnisse nachgerüstet zu werden.

Eine vorteilhafte Ausgestaltung der Erfindung sieht vor, dass die Platte in ihrem oberen Drittel an der Pendelachse aufgehängt ist, um bei der Bewegung der Transporteinrichtung durch die Trennwand zwischen zwei benachbarten Kammern weggeschwenkt oder angehoben zu werden, so dass die Platte imstande ist, in die darauf folgende Kammer selbständig hinein zu fallen.

Eine weitere vorteilhafte Ausgestaltung der Erfindung sieht vor, dass die Platte in senkrechter Projektionsrichtung von oben gesehen in die vom äußeren Rand der Transporteinrichtung, von dem aus die Oblongs zugeführt werden, dass die Platte von oben in die radial äußeren zwei Drittel, insbesondere in die radial äußere erste Hälfte, der Kammer der Transporteinrichtung ragt, bezogen auf die Tiefe der Kammer, wobei diese Anordnung auch von der Länge der zu befördernden Erzeugnisse abhängt.

In einer weiteren Ausgestaltung der Vorrichtung ist die Platte zur Anpassung an unterschiedlich lange pharmazeutische Erzeugnisse auf der Pendelachse längs derselben verschieblich angeordnet.

Eine weitere vorteilhafte Ausgestaltung der Erfindung sieht vor, dass das Hineinfallen der Platte in die Kammer durch eine Rückwärtsbewegung der Transporteinrichtung, bei einem Transportstern durch eine Rückwärtsdrehung, unterstützt werden kann.

In einer weiteren vorteilhaften Ausgestaltung der Erfindung weist die Platte in ihrer Längsrichtung einen nach unten offenen Schlitz auf, dessen Breite dem Durchmesser der Pendelachse entspricht, so dass die Platte in Richtung des Schlitzes verschiebbar angeordnet ist. Damit ist die Platte federnd nachgiebig aufgrund der Schwerkraft gegenüber den die Kammern begrenzenden Trennwänden ausgeführt, um ein Verkanten der Platte zu vermeiden.

Eine zusätzliche vorteilhafte Ausgestaltung der Erfindung sieht vor, dass die longitudinal in senkrechter Richtung verschieblich angeordnete Platte mittels eines Motors oder durch eine mit der Transporteinrichtung gekoppelte Mechanik in senkrechter Richtung direkt oder indirekt über eine Halterung motorisch bewegt werden kann.

Eine besonders vorteilhafte Ausgestaltung der Erfindung sieht vor, dass anstelle einer Platte eine um ihre Mittelachse drehbar angeordnete Scheibe von oben in die Kammer hineinragt, wobei die Scheibe an ihrem äußeren Umfang evolventenförmige Ausnehmungen aufweist, so dass eine Abrollbewegung der Scheibe ähnlich einem Zahnrad auf einer Zahnstange über die Trennwände zwischen zwei benachbarten Kammern hinweg möglich ist.

Mit der erfindungsgemäßen Vorrichtung ist des Weiteren der Vorteil verbunden, dass die Ausrichtung der länglichen Erzeugnisse schneller vonstatten geht als bei vergleichbaren Vorrichtungen des Standes der Technik, so dass auch eine größere Fördergeschwindigkeit der Transporteinrichtung gegenüber dem Stand der Technik möglich ist. Des Weiteren kann die erfindungsgemäße Vorrichtung auch an bestehende Transporteinrichtung des Standes der Technik vorteilhaft nachgerüstet werden.

Kurzbeschreibung der Zeichnung, in der zeigen:
- Figur 1: eine perspektivische Ansicht einer Zuführeinrichtung mit einer daran angeordneten erfindungsgemäßen Vorrichtung in Form einer länglichen Platte zum Abbremsen und Verkürzen des Transportweges von aus der Zuführeinrichtung kommender länglicher, fester Erzeugnisse, wie pharmazeutische Oblongs,
- Figur 2: eine Draufsicht auf die Zuführeinrichtung der Figur 1
- Figur 3: eine Seitenansicht der Zuführeinrichtung mit einer länger ausgeführten, erfindungsgemäßen Platte
- Figur 4: eine Seitenansicht einer Zuführeinrichtung mit einer geschlitzt ausgeführten, weiteren Platte
- Figur 5: eine Draufsicht auf einen Teil eines Transportsterns mit der daran angeordneten erfindungsgemäßen Vorrichtung zur zeichnerischen Darstellung des Zusammenspiels von Platte und Transporteinrichtung, wobei die Platte in der radial inneren Hälfte der Kammer angeordnet ist und
- Figur 6: eine Darstellung entsprechend der Figur 5, wobei hier die Platte in der radial äußeren Hälfte der Kammer angeordnet ist.

### Wege zur Ausführung der Erfindung:

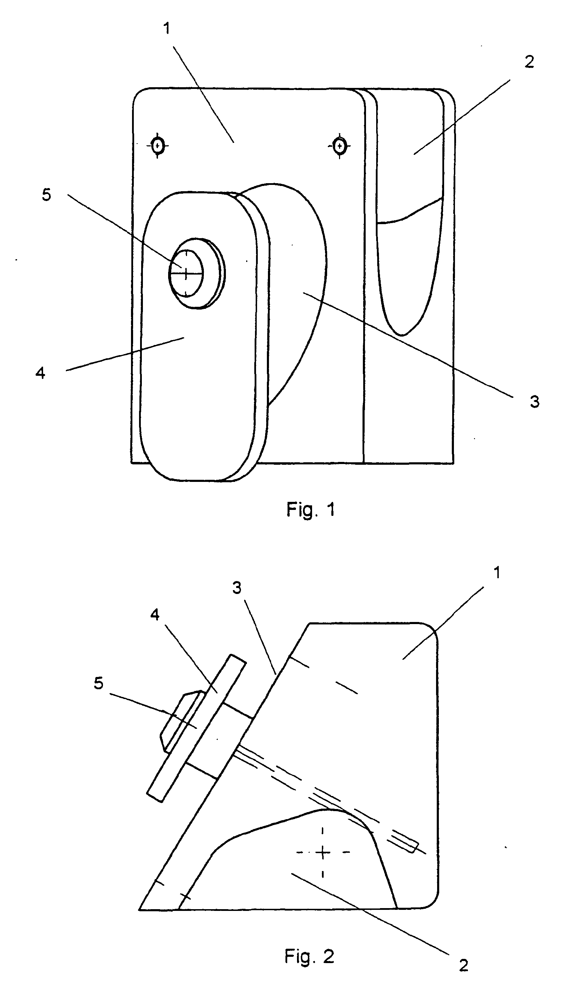

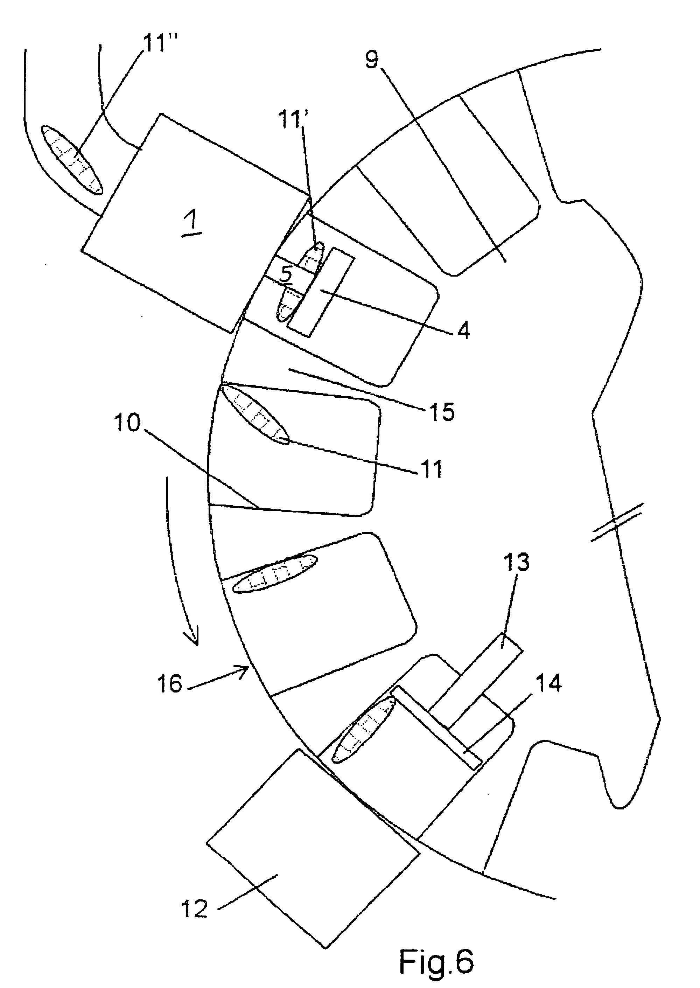

Eine in Figur 1 perspektivisch dargestellte Zuführeinrichtung 1 weist einen Kanal 2 auf, der in einer in Richtung einer nach außen und nach oben offenen Kammer 10 einer Transporteinrichtung 9, wie Transportstern 9 gemäß der Figur 5, gerichteten Austrittsöffnung 3 endet. Vor der Austrittsöffnung 3 der Zuführeinrichtung 1 ist eine längliche, vorzugsweise zungenförmige Platte 4 um eine oberhalb ihres Schwerpunktes angeordnete Pendelachse 5 drehbar angeordnet, wobei die Platte 4 aufgrund ihrer Schwerkraft pendelnd senkrecht nach unten hängt, wie es in Figur 1 gezeigt ist. Die Hauptebene der Platte 4 ist dergestalt gerichtet, dass diese parallel zu der von der Austrittsöffnung 3 der Zuführeinrichtung 1 gebildeten Ebene verläuft. Die Pendelachse 5 zur Halterung der Platte 4 ragt bei dieser Ausführung durch die Austrittsöffnung 3 hindurch. Vorzugsweise ist die Pendelachse mit dem der Zuführeinrichtung 1 zugewandten Ende in der Zuführeinrichtung 1 geeignet befestigt oder verankert.

In Figur 2 in Zusammenhang mit den Figuren 5 und 6 ist zu erkennen, dass die Platte 4 parallel zu der von der Austrittsöffnung 3 gebildeten Ebene angeordnet und die Pendelachse 5 senkrecht zu dieser Ebene ausgerichtet ist; die Pendelachse 5 ist geeignet in der Zuführeinrichtung 1 verankert.

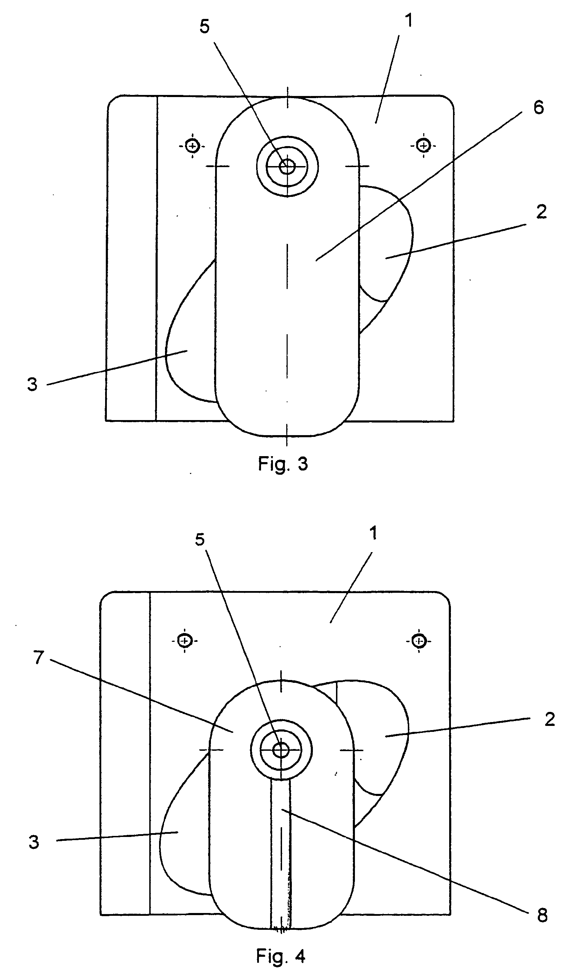

In Figur 3 ist eine weitere Seitenansicht der Zuführeinrichtung 1 mit einer weiteren erfindungsgemäßen Platte 6 gezeigt, nämlich in Draufsicht auf eine der Hauptoberflächen, wobei die Platte 6 gegenüber der Platte in Figur 1 länger ausgeführt ist. Hier ist die Pendelachse 5 oberhalb der Austrittsöffnung 3 der Zuführeinrichtung 1 angeordnet und geeignet innerhalb der Zuführeinrichtung gehaltert.

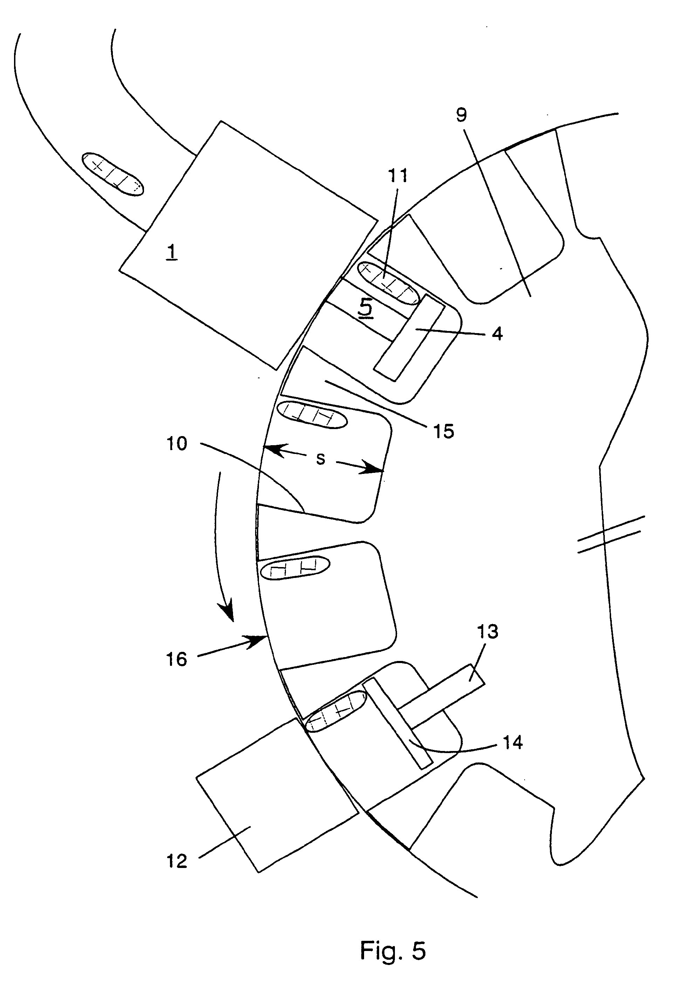

Eine weitere Ausführungsform einer Platte 7 in Figur 4 weist einen von der Pendelachse 5 nach unten verlaufenden durchgehenden Schlitz 8 auf, wobei die Platte normalerweise mit dem obersten Ende des Schlitzes aufgrund der Schwerkraft auf der Pendelachse 5 aufliegt, welche durch die Platte 7 hindurchführt. Auf diese Weise kann die Platte 7 zusätzlich zur Pendelbewegung um die Pendelachse 5 eine Bewegung in Richtung ihrer größten Ausdehnung entlang des Schlitzes 8 ausführen, die Platte 7 kann beispielsweise in einfacher Weise auf die Pendelachse 5 aufgesetzt und von ihr abgenommen werden. Auch hier ist die Pendelachse 5 in geeigneter Weise in der Zuführeinrichtung 1 gehaltert.

In der Figur 5 ist das Zusammenspiel der erfindungsgemäßen Vorrichtung mit einer Transporteinrichtung gezeigt, welche hier ein rotierbar angeordneter Transportstern 9 des Standes der Technik mit an seinem Umfang peripher angeordneten Kammern 10 ist, welche einerseits radial nach außen für den Einlauf der Erzeugnisse, beispielsweise pharmazeutische Oblongs, und andererseits nach oben hin offen sind; zwei benachbarte Kammern 10 sind voneinander durch jeweils eine Kammerwand 15 getrennt. Die Kammerwand kann darüber hinaus auch an das Erzeugnis angepasst sein.

Die an der Zuführeinrichtung 1 angeordnete Platte 4 der Figur 1 ist gegenüber dem Transportstern 9 dergestalt ausgerichtet, dass die Platte 4 parallel zu derjenigen Ebene ausgerichtet ist, welche die Einlauföffnung 16 der Kammern 10 aufspannt. Die Zuführeinrichtung 1 ist beispielsweise am Außenumfang des Transportsterns 9 angeordnet, wobei die Pendelachse 5, welche oberhalb des Transportsterns verläuft, in Richtung der Rotationsachse des Transportsterns 9 weist und damit die Platte 4 von oben in die jeweilige Kammer des Transportsterns 9 zu ragen imstande ist. Aufgrund der Verstellbarkeit der Platte 4 längs auf der Pendelachse 5 kann die Platte 4 an unterschiedlich lange sowie breite Erzeugnisse, wie unterschiedlich lange sowie breite Oblongs, angepasst werden. Im gezeigten Beispiel befindet sich die Platte 4 in der radial inneren Hälfte der Kammer 10, in welche das Erzeugnis aus der Zuführeinrichtung 1 einläuft.

Die Vorrichtung arbeitet folgendermaßen: Ein Erzeugnis 11 durchläuft die Zuführeinrichtung 1, tritt aus der Austrittsöffnung 3 des durch die Zuführeinrichtung 1 führenden Kanals 2 aus und läuft durch die Einlauföffnung 16 der Kammer 10 in die der Austrittsöffnung 3 gegenüber liegende Kammer 10 des Transportsterns 9 ein. Nach einem Weg, der in etwa der Breite bzw. der Länge des Erzeugnisses 11 oder gerade seiner Länge oder seiner Breite oder mehr entspricht, läuft das Erzeugnis 11 gegen die Platte 4 an und wird abgebremst. Das Erzeugnis 11 kommt somit bündig oder fast bündig mit der peripheren Begrenzung des Transportsterns 9 zum Liegen.

Der sich drehende Transportstern 9 nimmt das Erzeugnis 11 mit, welches sich an die Kammerwand 15 der Kammer 10 anlegt, selbst wenn das Erzeugnis 11 schief eingelaufen sein sollte. Beim Einlaufen der Kammer 10 mit dem darin befindlichen Erzeugnis 11 in eine Härteteststation, bestehend aus einem feststehenden Backen 12 und einem beweglich an einem Stempel 13 angeordneten Backen 14, befindet sich das radial nach außen weisende Ende des Erzeugnisses 11 in unmittelbarer Nachbarschaft vor dem feststehenden Backen 12 oder liegt daran an, so dass beim Anlaufen des beweglich angeordneten Backens 14 an das andere benachbarte Ende des Erzeugnis dasselbe nicht oder nur minimal in Richtung des feststehenden Backens 12 verschoben zu werden braucht. Auf diese Weise kann sich das Erzeugnis beim nun einsetzenden Pressvorgang nicht verdrehen oder verkanten, sondern wird in richtiger Weise verpresst.

Sobald das Erzeugnis 11 abgebremst worden ist und sich der Transportstern 9 weiterdreht, wird die Platte 4 durch die Kammerwandung 15 um die Pendelachse 5 gedreht und angehoben, so dass die Platte 4 über die Kammerwand 15 hinwegläuft und in die nächste Kammer 10 hineinfällt. Das Hineinfallen der Platte 4 in die nächstfolgende Kammer 10 des Transportsterns 9 kann dadurch erleichtert werden, indem der Transportstern 9, nachdem die Platte 4 über die Kammerwand 15 hinweg gelaufen ist, etwas zurückgedreht wird.

Figur 6 zeigt die Vorrichtung gemäß der Figur 5, wobei hier die Platte 4 in der radial äußeren Hälfte der Kammer 10 des Transportsterns 9 sich befindet; ansonsten entspricht die Ausgestaltung derjenigen der Figur 5. Ein Erzeugnis 11' läuft nach dem Auslaufen aus der Zuführeinrichtung 1 in die Kammer 10 des Transportsterns 9 ein, läuft gegen die Platte 4 an und richtet sich mit seiner Breitseite an der Platte 4 anliegend quer zur Wandung der Kammer 10 des Transportsterns aus, was im Übrigen auch die überwiegende Ausrichtung des Erzeugnisses ist. Nach dem Wegschwenken der Platte 4 durch die vorschiebende Wandung der Kammer läuft die Wandung gegen das Erzeugnis, dreht dieses um einen Winkel bis zu 90 Grad, bis das Erzeugnis mit seiner Breit- oder Längsseite längs der Wandung der Kammer 10 anliegt, wie es der Figur 6 zu entnehmen ist. Anschließend läuft diese Kammer mit dem nunmehr richtig ausgerichteten Erzeugnis in die Härteteststation ein.

Die erfindungsgemäße Vorrichtung ist auch zum Abbremsen von runden oder linsenförmigen Erzeugnissen geeignet.

### Gewerbliche Anwendbarkeit:

Die Erfindung ist insbesondere in der pharmazeutischen Industrie beim Transport von Erzeugnissen, wie pharmazeutische Oblongs, gewerblich anwendbar. Die Nützlichkeit der Erfindung besteht insbesondere darin, dass die Erzeugnisse mittels einer von oben in eine Kammer einer Transporteinrichtung hinein ragenden, länglichen Platte so abgestoppt werden, dass das der Platte abgewandte Ende des Erzeugnisses bündig oder die periphere Rundung des Erzeugnisses tangential mit der äußeren Begrenzung der Transporteinrichtung, insbesondere der peripheren Begrenzung eines Transportsterns beim Einsatz der erfindungsgemäßen Platte im Zusammenhang mit dem periphere Kammern aufweisenden Transportstern, zum Liegen kommt.

### Bezugszahlenliste:

- 1: Zuführeinrichtung
- 2: Kanal
- 3: Austrittsöffnung
- 4, 6, 7: Platten
- 5: Pendelachse
- 8: Schlitz
- 9: Transportstern
- 10: Kammern
- 11: Oblong
- 12: feststehender Backen einer Härteteststation
- 13: Stempel
- 14: beweglicher Backen der Härteteststation
- 15: Kammerwand
- 16: Einlauföffnung in die Kammer

## Patentansprüche

1. Vorrichtung zum Abbremsen und Verkürzen des Transportweges von aus einer Zuführeinrichtung (1) kommender fester Erzeugnisse (11) in Form von Schüttgut, wie Oblongs (11), welche in eine sowohl gegenüber dem Transportweg des Erzeugnisses (11) als auch von oben offene Kammer (10) aufweisende Transporteinrichtung (9) zuführbar sind,
**gekennzeichnet durch** eine längliche Platte (4), welche um eine Pendelachse (5) oberhalb des Schwerpunktes der Platte (4) entweder drehbar oder longitudinal in senkrechter Richtung verschieblich angeordnet ist und deren Breite geringer als die Breite der Kammer (10) der Transporteinrichtung (9) ist und die im Wesentlichen zu der **durch** die Eintrittsöffnung (16) in die Kammer (10) der Transporteinrichtung (9) aufgespannten Ebene parallel verläuft und von oben in die Kammer (10) ragt, gegen welche Platte (4) das einzelne Erzeugnis (11) anläuft und **dadurch** abgebremst wird.

2. Vorrichtung nach Anspruch 1, **dadurch gekennzeichnet,**
**dass** die Transporteinrichtung entweder ein um eine vertikale Achse rotierbar angeordneter, mit einer Mehrzahl von peripher angeordneten Kammern (10) ausgestatteter Transportstern (9) oder ein mit seitlichen Kammern ausgestattetes, längs laufendes Band oder ein Schieber ist, und dass die Pendelachse (5) an der Zuführeinrichtung (1) befestigt ist und die Platte (4) im oberen Drittel derselben durchragt, wobei die Platte (4) um die Pendelachse (5) pendelnd aufgehängt ist und damit bei Bewegung der Transporteinrichtung (9) von der Trennwand (15) zwischen zwei benachbarten Kammern (10) anhebbar ist und in die folgende Kammer (10) selbständig hineinfällt.

3. Vorrichtung nach Anspruch 1 oder 2, **dadurch gekennzeichnet,**
**dass** die Platte (4) zur Anpassung an unterschiedlich lange Erzeugnisse (11), wie unterschiedlich lange Oblongs, auf der Pendelachse (5) verschieblich längs derselben angeordnet ist.

4. Vorrichtung nach einem der vorherigen Ansprüche, **dadurch gekennzeichnet,**
**dass** die Platte (4) von oben in die radial äußeren zwei Drittel, insbesondere in die radial äußere erste Hälfte, der jeweiligen Kammer (10) der Transporteinrichtung (9) ragt, bezogen auf die radiale Tiefe (S) der Kammer (10).

5. Vorrichtung nach einem der vorherigen Ansprüche, **dadurch gekennzeichnet,**
**dass** das Hineinfallen der Platte (4) in die Kammer (10) durch eine Rückwärtsbewegung der Transporteinrichtung (9), insbesondere eine Rückwärtsdrehung des Transportsterns (9), unterstützbar ist.

6. Vorrichtung nach einem der vorherigen Ansprüche, **dadurch gekennzeichnet,**
**dass** die Platte (4) in ihrer Längsrichtung einen nach unten offenen Schlitz (6) aufweist, dessen Breite dem Durchmesser der Pendelachse (5) entspricht, so dass die Platte (4) in Richtung des Schlitzes (6) verschiebbar angeordnet ist.

7. Vorrichtung nach Anspruch 1, **dadurch gekennzeichnet,**
**dass** die longitudinal in senkrechter Richtung verschieblich angeordnete Platte (4) an einer Halterung angeordnet ist, welche unter Mitnahme der Platte (4) in senkrechter Richtung bezüglich der Transporteinrichtung (9) mittels eines Motors oder dergleichen motorisch bewegbar ist.

8. Vorrichtung nach einem der Ansprüche 1 bis 3 **dadurch gekennzeichnet, dass** die Platte (4) als eine von oben in die Kammer (10) der Transporteinrichtung (9) hineinragende, um ihre Mittelachse (5) drehbar angeordnete Scheibe (4) ausgeführt ist, wobei die Scheibe (4) an ihrem äußeren Umfang evolventenförmige Ausnehmungen aufweist, so dass eine Abrollbewegung der Scheibe (4) über die Trennwand (15) zwischen zwei benachbarten Kammern (10) ausführbar ist.

9. Vorrichtung nach Anspruch 1, **dadurch gekennzeichnet,**
**dass** die Pendelachse der Platte und somit dieselbe, unabhängig von der Zuführeinrichtung, peripher oder im Wesentlichen peripher stationär bezüglich der Transporteinrichtung montiert sind.

## Claims

1. A device for slowing down and reducing the transport path of solid products (11) delivered as bulk material from a feeder (1), such as oblongs (11) that can be fed into a transport means (9) that is positioned opposite from the transport path of the product (11) and that has a chamber (10) that is open from the top,
**characterized by** an elongated plate (4) that is arranged around a pendulum axis (5) above the center of gravity of the plate (4) so that it is either rotatable or longitudinally moveable in the vertical direction and whose width is less than the width of the chamber (10) of the transport means (9), said plate running essentially parallel to the plane extending through the inlet opening (16) into the chamber (10) of the transport means (9) and protruding from above into the chamber (10), whereby the individual product (11) strikes said plate (4) and is thus slowed down.

2. The device according to Claim 1, **characterized in that**
the transport means is either a star feeder (9) that is arranged so as to be rotatable around a vertical axis and that is fitted with a plurality of peripherally arranged chambers (10) or else it is a belt that runs lengthwise and is equipped with lateral chambers or it is a slider, and **in that** the pendulum axis (5) is attached to the feeder (1) and the plate (4) protrudes into the upper third of said feeder (1), whereby the plate (4) is suspended so as to swing around the pendulum axis (5) and consequently, when the transport means (9) moves, said plate (4) can be raised from the partition (15) located between two adjacent chambers (10) and automatically drops into the next chamber (10).

3. The device according to Claim 1 or 2, **characterized in that**,
in order to be adapted to products (11) of different lengths such as, for example, oblongs of different lengths, the plate (4) is arranged on the pendulum axis (5) so as to move lengthwise on it.

4. The device according to one of the preceding claims,
**characterized in that**
the plate (4) protrudes from above into the radially outer two-thirds, especially into the radially outer first half, of the appertaining chamber (10) of the transport means (9), relative to the radial depth (S) of the chamber (10).

5. The device according to one of the preceding claims,
**characterized in that**
the dropping of the plate (4) into the chamber (10) can be assisted by a backwards movement of the transport means (9), especially a backwards rotation of the star feeder (9).

6. The device according to one of the preceding claims,
**characterized in that**
the plate (4) has a slit (6) that is open downwards in the lengthwise direction and whose width corresponds to the diameter of the pendulum axis (5), so that the plate (4) is arranged so as to move in the direction of the slit (6).

7. The device according to Claim 1, **characterized in that**
the plate (4), which is arranged so as to move longitudinally in the vertical direction, is arranged on a holder that can be moved by means of a motor or the like, carrying along the plate (4) in the vertical direction relative to the transport means (9).

8. The device according to one of Claims 1 to 3, **characterized in that** the plate (4) is configured as a disk (4) that protrudes from above into the chamber (10) of the transport means (9) and that is arranged so as to be rotatable around its center axis (5), whereby the disk (4) has involute-shaped recesses on its outer circumference, so that the disk (4) can execute a rolling movement over the partition (15) between two adjacent chambers (10).

9. The device according to Claim 1, **characterized in that**
the pendulum axis of the plate and thus said plate itself, irrespective of the feed direction, are mounted stationarily relative to the transport means, peripherally or essentially peripherally.

## Revendications

1. Dispositif de ralentissement et de réduction du trajet d'acheminement pour des articles solides (11) tels que des oblongs (11), délivrés en vrac par une unité d'alimentation (1), lesquels peuvent être acheminés dans une unité de transport (9) présentant une chambre ouverte aussi bien vis-à-vis du trajet d'acheminement de l'article (11) que également d'en haut,
**caractérisé par** une plaque de forme allongée (4) laquelle est disposée autour d'un axe oscillant (5) au-dessus du centre de gravité de la plaque (4) de façon à pouvoir ou tourner ou se déplacer longitudinalement dans le sens vertical et dont la largeur est inférieure à la largeur de la chambre (10) de l'unité de transport (9) et qui pour l'essentiel s'étend en parallèle au plan de l'ouverture d'entrée (16) dans la chambre (10) de l'unité de transport (9) et se dresse d'en haut dans la chambre (10), plaque contre laquelle l'article individuel (11) arrive et est de ce fait ralenti.

2. Dispositif selon la revendication 1, **caractérisé en ce que**
l'unité de transport est ou un dispositif de transport en étoile (9) disposé de façon à tourner autour d'un axe vertical, comportant une pluralité de chambres (10) disposées en périphérie, ou un tapis se déplaçant dans le sens de la longueur et doté de chambres latérales, ou un coulisseau, et que l'axe oscillant (5) est fixé à l'unité d'alimentation (1) et la plaque (4) se dresse dans le tiers supérieur de celle-ci, la plaque (4) étant accrochée en oscillant autour de l'axe oscillant (5) et peut de ce fait en cas de mouvement de l'unité de transport (9) se soulever de la cloison (15) entre deux chambres voisines (10) et tomber de façon autonome dans la chambre suivante (10).

3. Dispositif selon l'une des revendications 1 ou 2, **caractérisé en ce que**
la plaque (4) est disposée sur l'axe oscillant (5) de façon à pouvoir se déplacer dans le sens de la longueur de celui-ci pour pouvoir s'adapter à des articles de longueurs différentes, tels des oblongs de longueurs différentes.

4. Dispositif selon l'une des revendications ci-avant, **caractérisé en ce que** la plaque (4) se dresse d'en haut dans les deux tiers extérieurs radiaux, en particulier dans la première moitié extérieure radiale de la chambre respective (10) de l'unité de transport (9), rapporté à la profondeur radiale (S) de la chambre (10).

5. Dispositif selon l'une des revendications ci-avant, **caractérisé en ce que**
la tombée de la plaque (4) dans la chambre (10) peut être étayée par un mouvement en arrière du système de transport (9), en particulier un mouvement de rotation en marche arrière du dispositif de transport en étoile (9).

6. Dispositif selon l'une des revendications ci-avant, **caractérisé en ce que**
la plaque (4) présente dans le sens de la longueur une fente (6) ouverte vers le bas dont la largeur correspond au diamètre de l'axe oscillant (5), de sorte que la plaque (4) est disposée de façon à pouvoir se déplacer dans le sens de la fente (6).

7. Dispositif selon la revendication 1, **caractérisé en ce que**
la plaque (4) disposée de façon à pouvoir se déplacer longitudinalement dans le sens vertical est disposée sur un support qui se déplace au moyen d'un moteur ou d'une façon motrice comparable en entraînant la plaque (4) dans le sens vertical par rapport au dispositif de transport (9).

8. Dispositif selon l'une des revendications 1 à 3, **caractérisé en ce que**
la plaque (4) est réalisée sous forme de disque (4) disposé de façon à pouvoir tourner autour de son axe médian (5) se dressant d'en haut dans la chambre (10) de l'unité de transport (9), le disque (4) présentant à la périphérie des évidements en développante, de sorte qu'un mouvement de déroulement du disque (4) peut s'effectuer au dessus de la cloison (15) entre deux chambres voisines (10).

9. Dispositif selon la revendication 1, **caractérisé en ce que**
l'axe oscillant de la plaque et de ce fait, la plaque elle-même, est monté indépendamment de l'unité d'alimentation en périphérie ou essentiellement en périphérie de façon stationnaire par rapport à l'unité de transport.
